# EUROPEAN PATENT SPECIFICATION

(11) **EP 2 045 587 B1**
(45) Date of publication and mention of the grant of the patent: **30.11.2022**
(21) Application number: 08102200.6
(22) Date of filing: 29.02.2008
(51) Int. Cl.: G01G 23/01, G01D 5/39, G01G 23/37

(54) **Method and system for verification of a measurement device**
Verfahren und System zur Verifizierung einer Messvorrichtung
Procédé et système de vérification d'un dispositif de mesure

(30) Priority: 05.10.2007 FI 20075710
(43) Date of publication of application: 08.04.2009
(73) Proprietor: TAMTRON OY, 33561 Tampere (FI)
(72) Inventor: Asikainen, Pentti, 35800, Mänttä (FI)
(74) Representative: Heinonen & Co

(56) References cited:
- EP-A- 1 176 404
- EP-A- 1 239 268
- EP-A- 1 241 455
- WO-A-01/57477
- US-A- 5 105 896
- US-A- 5 673 331
- US-A1- 2007 073 505

## Description

### Technical field

The invention relates to a method for verification of a measurement device. The invention can be applied to the verification of measurement devices, which are used for the measurement of physical magnitudes, such as e.g. weight, volume, flow, power, energy, velocity, acceleration, distance, temperature, concentration of substance, voltage, current, frequency or radiation intensity. When applied for e.g. verification of weighing devices, the invention can be preferably used for verification of weighing equipment, which are used for weighing material that is transferred in loading or transportation equipment.

### Background technology

Even if the invention can be applied for the verification of devices which measure various magnitudes, the prior art relating to verification of weighing equipment is next discussed in a form of an example.

Material transfer means, such as wheel loaders, excavators or forklifts often include a weighing device for weighing material to be transferred. The weighing information is used for e.g. determining the amount of the material to be transferred for debiting the material. Scales can also be used for other purposes, such as for facilitating the loading of a suitable amount of material with the material transfer means to a truck in order to avoid overloading or transporting incomplete loads.

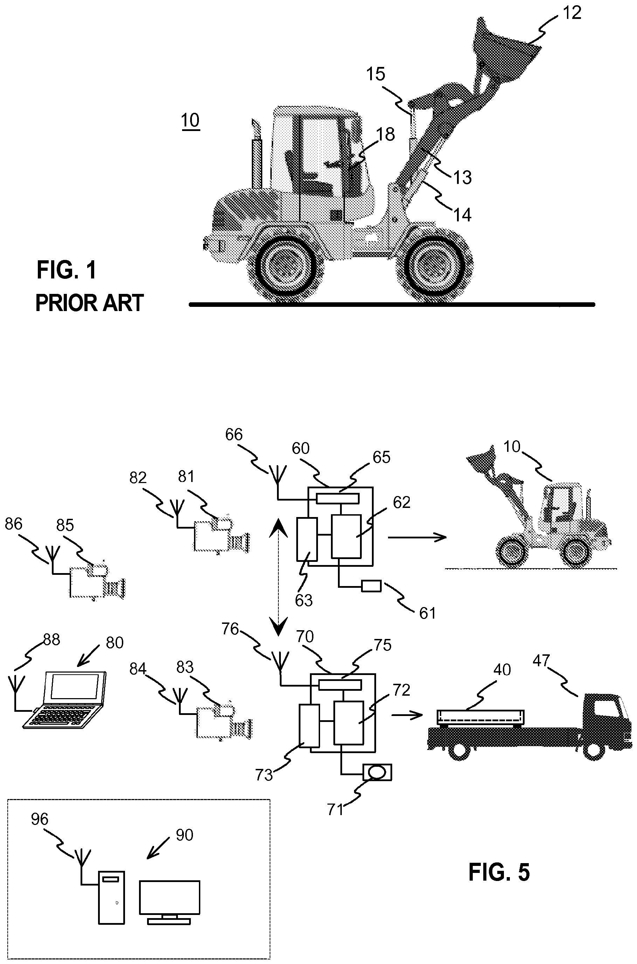

Figure 1 illustrates as an example one material transfer means according to the prior art, a wheel loader 10. The wheel loader has a bucket 12 as a carrying means for the material to be transferred. The bucket is connected to the body parts of the wheel loader with an articulated beam 13. In order to lift/lower the bucket, hydraulic cylinders 14 are connected to the beam, which cylinders are controlled with valves. Additionally, the wheel loader has hydraulic cylinders 15 for turning the bucket.

The purpose of the weighing device of the wheel loader is to weigh the weight of the material which is currently placed in the bucket. The weighing device may function in such a way, for example, that pressure sensors are installed in the lifting cylinders, which pressure sensors measure the pressure of the liquid in the cylinder. Additionally there may also be other sensors in the system or the weighing can be made with strain gauge transducers. The information received from the sensors is processed on the basis of e.g. measurement parameters, and a weighing result is achieved as a result of the processing. The user interface 18 of the weighing device is usually placed in the cabin of the wheel loader.

When a measurement device is used as a basis of debiting, verification must be periodically performed for it. It is ensured by the verification that the measurement result does not deviate from the real value of the object more than what is allowed. The largest allowed deviation as well as the verification procedure is usually determined by the authorities.

The verification is commonly performed by using precision objects, in which the value of the magnitude to be measured is very accurately set into a predetermined reading. When the measurement device is e.g. a scale of material transfer means, the verification can be performed by weighing with the scale of the material transfer means various amounts of precision weights, the weight of which is within the operating range of the scale. The precision weight is placed on the material transfer means and it is weighed with the scale of the material transfer means. The weighing result of the weighing device is compared to the known weight of the weight/weights which have been placed to the material transfer means. It is also possible that the verification procedure includes several weighings of a same precision weight, weighings during movement of the material transfer means and/or weighings in different positions of the carrying means, and during movement and pauses between the movements of the carrying means. The purpose of several weighings is also to check the repeatability of the weighing results of the weighing device.

Document US2007/0073505 A1 discloses a method for calibrating a weighing apparatus. A test mass with a known weight is used. The test mass is weighed, and the weighing apparatus is adjusted to give the correct weight as a result. Adjustment is made with added weights as long as the whole weighing capacity is reached. In a calibration test procedure, the weight of the test mass is compared to weighing result. If the resulting weight is within a tolerance the action may be passed.

Document EP1241455 A1 discloses a measurement system comprising imaging means for imaging the measurement process. Image data and measurement result data are communicated to a remote location where the measurement result can be checked and approved.

In order to perform the verification in a reliable manner, it is essential that the performance of the verification is controlled/monitored by an authority, someone who is authorised by the authority or some other reliable instance. In practice, the verification process of measurement devices is often given as a task and responsibility for a certain organisation. In this case, the verification is performed, or the performance is monitored by a representative of the organisation, who also performs the acceptance/rejection of the verification on the basis of the measurement results, and gives a certificate of the verification.

Some disadvantages are related to the prior known verification solutions. If the verification is performed in specific premises which are meant for verification the measurement equipment to be verified must be transported to the concerned location for performing the verification. In this case the measurement devices to be verified must be kept outside the normal use during both the verification and the transportation. In addition to the measurement device, it is necessary to transport e.g. a possible work machine with which the measurement device is used, because a measurement device must often be verified together with the actuator in which the measurement device is used.

It is also possible to perform the verification at the operating location, the local point, of the measurement device to be verified. In this case the person monitoring the verification travels to the performance point of the verification and the measurement device to be verified need not be transported into a specific place for the verification. However, there is then a disadvantage that the person monitoring the verification must travel to local points in which the verification is performed. The places in which the measurement devices are commonly used and in which the verification should be performed, may be in distant locations and/or at a difficult travelling distance from the work place of the person who monitors the verification. Thus the travelling may take a significant proportion of the work time of the person who monitors the verification, and additionally, the travelling costs may be significant.

Further, one disadvantage of the prior art is that in order to find a suitable point of time for the verification it is necessary to match the operation time table of measurement device and a possible related work machine, the time tables of the users of the measurement device participating the verification, and the time table of the person who monitors the verification. When the number of the measurement devices to be verified is large, it may be difficult to match these time tables.

### Summary of the invention

The purpose of the present invention is to avoid or reduce the disadvantages of the prior art which were described above.

The object of the invention is achieved with a solution, in which data related to the measurements to be performed in the verification is transferred from the local point to a distant point in such a way that monitoring the performance of the verification can be performed in the distant point. The distant point may locate at a distance from the local point where the measurements are performed. Then the acceptance/rejection of the verification is done on the basis of the transferred information. This way it is possible to avoid the transportation of both the measurement device to be verified and the travelling of the person who monitors the verification from their own locations for the verification procedure.

The invention can be applied, for example, in connection with such a known verification solution in which one or several precision objects is measured with the measurement device, wherein the value of the magnitude to be measured is known with an accuracy which is required in the verification. Then the measurement results that are achieved with the measurement device are compared with the known value of the precision object, and the verification of the measurement device is accepted or rejected on the basis of whether the measurement result deviates from the known value less or more than the predetermined highest allowed deviation. In such a verification solution the invention is preferably applied in such a way that the information on the measurement results of the measurement device and the information on the value of the precision object, such as a precision weight, is transferred from the local point to the distant point for the monitoring and acceptance/rejection of the verification. In addition, it is possible to transfer to the distant point images and/or video image about the performance of the verification.

It is, however, possible to apply the invention also in such a verification solution in which the object to be measured is also measured with a reference measurement device, the accuracy of which is sufficient in relation to the accuracy which is required in the verification. In this case the results of the measurement device to be verified and the reference measurement device are compared in a corresponding manner as the results of the measurement device and the known value of the precision object were compared above. When using a reference measurement device the object to be measured need not be a precision object but the measurement can be performed with objects, which are commonly measured with the measurement device. This way it is possible to avoid transportation of precision objects, such as precision weights. Using a reference measurement device in verification is described in patent application FI20075710, which is not public at the time of filing the present patent application. In such a verification solution the present invention is preferably applied in such a way that the information on the results of measurement device and information on the measurement results of the reference measurement device are transferred from the local point to the distant point for the monitoring and acceptance/rejection of the verification. In addition, it is possible to transfer to the distant point images and/or video image about the performance of the verification.

The method according to the invention is characterised by claim 1.

Some preferable embodiments of the invention are described in the dependent claims.

Significant advantages can be achieved with the invention when compared to the known solutions. When using the solution according to the invention the person monitoring the verification does not need to travel to the local point where the measurements of the verification are performed. This way travel time and expenses are saved. In a corresponding manner, a certain amount of people monitoring verifications are able to monitor a significantly large amount of verifications of measurement devices.

In one embodiment of the inventive solution the information which relates to measurements or other actions of the verification is stored in e.g. a station placed in the local point, in a station placed in the distant point, or in a server which is connected to a data transfer network. This way the person who monitors the verification does not need to perform the monitoring exactly at the instant of measurement but the person can look through the information that is stored about the verification later, at a point of time which is suitable for her/him. Thus it is not necessary to match the time tables of the people performing the measurement and the usage of the measurement device for verification with the time table of the person monitoring the verification. This makes the practical arrangements of the verification easier. Additionally, the person monitoring the verification does not need to monitor the whole verification process but he/she can look through only the essential items of the stored information. This way the monitoring person can further save a significant amount of time.

It is also possible to make the verification process according to the invention in part or wholly automatic so that information on the objects to be measured or the information on the highest allowed deviation need not be processed manually during the performance of the verification. In the verification action, the measurement device or the reference measurement device can give an instruction for the user about which object is to be handled, and the results can be transferred between the devices automatically through wireless and/or wired connections. This way the measurement device can also compare automatically the measurement results in order to determine the deviation and possibly to compare the deviation values to the highest allowed values. Also the tuning which is performed before or in connection with the verification can be automatic or it can be performed from the distant location. Therefore, one advantage of the invention is that special knowledge is not needed in the local point in order to perform the verification.

In this patent application "verification" means e.g. especially such verification of the functionality and/or accuracy, which is required by the legislation, such as law, decree, directives etc. on a measurement device, such as a measurement device which is used for debiting a commodity. Additionally, verification has a wider meaning of inspection of any function and/or accuracy of a measurement device which is required by some instance, standard, quality system, or other instruction. The verification can most preferably relate to checking a weighing device, but verification has here a wider meaning of inspecting any other measurement device as well.

In this patent application the term "local point" means a location in which the measurement relating to the verification of a measurement device to be verified takes place. "Distant point" means a location, which has at least such a distance from the local point that the monitoring of the measurement incident requires use of auxiliary means in order to transfer the information relating to the verification incident from the local point to the distant point.

In this patent application a "measurement object" or in short "object" means e.g. the matter in which the magnitude to be measured is related to and from which the measurement of the magnitude is performed, such as material to be weighed. However, a measurement object may also mean the matter, which produces the magnitude to be measured, such as a light source, whereby the intensity of the lights it produces is measured with the measurement device to be verified.

### Short description of the drawings

In the following part the preferable exemplary embodiments of the invention are described in more detail by referring to the enclosed drawings, in which:
- Figure 1: illustrates a wheel loader according to prior art;
- Figure 2: illustrates a flow diagram of one embodiment of a method according to the invention for verification of a weighing device;
- Figure 3: illustrates a flow diagram of another embodiment of a method according to the invention for verification of a weighing device;
- Figure 4: illustrates a flow diagram of a third embodiment of a method according to the invention for verification of a weighing device;
- Figure 5: illustrates a block diagram of an exemplary system for implementing a method according to the invention for verification of a weighing device; and
- Figure 6: illustrates a block diagram of an exemplary system for implementing a method according to the invention for verification of a weighing device;

### Detailed description of the invention

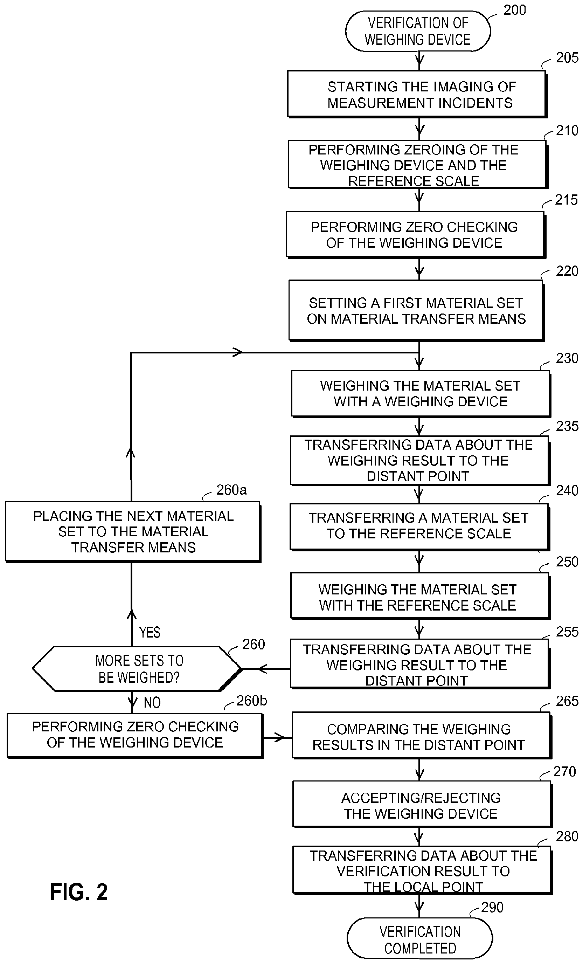

Figure 2 illustrates one method according to the invention for verification of a measurement device 200, in which method of the Figure the measurement device is a weighing device of a material transfer means. The principle of the method can, however, be applied also for verification of measurement devices which measure other magnitudes and for weighing devices which are meant for other uses.

First in phase 205 imaging of measurement incidents relating to the verification is started. In the imaging which is performed with imaging means, such as a video camera, image information is achieved, which is transferred electrically from the measurement location i.e. location point to the distant point. In phase 210 it is checked that the carrying means of the material transfer means is empty, and the weighing device of the material transfer means and the reference scale are adjusted to zero. One can also check the operation of the reference scale by e.g. using a small precision weight. The size of the precision weight may be e.g. only 10% of the maximum weight of the operating range of the reference scale.

After zeroing, preferably zero checking is performed, phase 215. This can be done e.g. in the case of a wheel loader in such a way that the weighing result remains in zero with a predetermined accuracy after each movement of the bucket. During the zero checking the weighing device is preferably set to an accuracy step which is one accuracy step smaller than the accuracy step under normal use so that the stability of zero is more accurately detected.

In phase 220 a first weighing set of material is set on the material transfer means, which first weighing set corresponds in its weight to the smallest verification weight to be used. The material can be set to the material transfer means in the same way in which material is set to the material transfer means in its common use. Thus, material can be set to the bucket of a wheel loader by filling the bucket from a material heap, such as a gravel heap, by controlling the wheel loader and the bucket. The weight of the bucket is monitored with a weighing device included in the material transfer device, and amount of material is set to the material transfer means, which amount is close to the smallest required verification weight. It is preferable to use same kind of a measurement object such as material in the verification as what is used in the common use of the measurement device. This way e.g. the weight distribution corresponds to the weight distribution appearing in a real use, and the verification situation corresponds very closely to the real situation of use. The corresponding situation also concerns measurement of other magnitudes.

When a suitable amount of material has been achieved, the material is weighed with a weighing device of the material transfer means, phase 230. The information on the weighing result is transferred electronically to the distant point, phase 235, in which distant point the weighing result is recorded or stored. The weighing result can also be stored/recorded at the local point. The transfer of the measurement result can take place e.g. in a form of digital, numerical data, whereby the information is achieved from the measurement device under verification. However, it is also possible to image the display of the measurement device with imaging means, such as a camera or a video camera, and to transfer the achieved image information to the distant point. There is an advantage in transferring image information that it is easier to verify the correctness of the transferred information, but there is a disadvantage that a higher transfer capacity is required for transferring a sufficiently accurate image when compared to transferring numerical information. If the transfer of numerical data is used it is easier to perform calculatory processing of the result in the distant point.

After this, in phase 240, the material located at the material transfer means is transferred to the reference scale so that the carrying means becomes empty. The emptying of the material transfer means can be checked with the weighing device, which should give zero as a weighing value after the emptying. This phase is preferably described with imaging means, and the image information is transferred to the distant point for monitoring the performance of the phase. After the material has been transferred to the reference scale it is weighed with the reference scale, phase 250. The information about the weighing is transferred electronically to the distant point, phase 255, in which distant point the weighing result is recorded or stored. The weighing result can also be stored/recorded at the local point. The weighing result of the reference scale can also be transferred to the distant point either in the form of numerical data or image in the same way as the information on the measurement result of the measurement device.

After the weighing, the reference scale can be emptied. It is also possible to weigh several material sets without emptying the reference scale between the weighings, whereby the reference scale is preferably zeroed/tared before weighing of each material set. If the reference scale is installed on a platform of a truck the reference scale can be emptied by tipping the platform of the truck into an inclined position whereby the material on the reference scale slides out of its weighing level. If the weighing level has walls, it is preferable that one wall can be opened when the platform is tilted for the removal of the material. Alternatively, the weighing level of the reference scale can be continuously inclined and provided with a controllable removal opening at the lowest position of the weighing level, whereby the material can be removed from the weighing level by opening the removal opening. In case of material pieces the pieces can be removed with the material transfer means. The above mentioned material transfer actions and zeroing/taring are imaged and the image information is transferred to the distant point in order to monitor the actions. The information on zeroing/taring can be transferred additionally or alternatively by means of e.g. a digital message on the basis of a signal received from the weighing device.

Next it is estimated/checked in phase 260, whether the verification requires more weighings of material sets. Often the verification is made with many different weights and/or loads. The amount of weighings and the verification weights to be used are commonly determined by the authorities. In the present embodiment, the weight of each material set can deviate within certain limits because the verification is not based on the accuracy of the weight to be weighed. Therefore, the weights of the material sets can vary more from the standard values, preferably significantly more, than e.g. the accuracy which is required from the measurement device.

If more weighings are needed, next material set is placed to the carrying means of the material transfer means in phase 260a e.g. in the same way as the previous material set. After this, phases 230-255 are performed again. Material sets of determined quantities are weighed in a required amount according to the verification regulations, and the result information on the weighings and the image data about performing the verification are transferred from the local point to the distant point.

After weighing all material sets, it is preferable to perform zero checking, phase 260b. If desired, the zero checking can be performed also after weighing of each material set before setting the next material set to the material transfer means in phase 260a.

The weighing results given by the weighing device and the reference device from each material set are compared to each other in the distant point in phase 265 in order to determine deviation between the weighing results of the weighing device and the reference scale. The value of the deviation is further compared to the maximum allowed value of deviation. If the value of the deviation is at most as high as the highest allowed deviation, the weighing device fulfils the regulation in this respect. If the value of the deviation is higher than the highest allowed deviation the weighing device does not fulfil the verification regulations. The comparison can be made according to Figure 2 after all material sets have been weighed. Alternatively the comparison can be made after weighing of each material set, whereby the measurement results are transferred from the measurement location to the distant point preferably always after each measurement.

When the weighings and result comparisons of the material sets have been performed, the information on the result of the verification, i.e. the acceptance/rejection of the weighing device, can be transferred electrically from the distant point to the local point, phase 280. After this, the verification is finalised, phase 290. A certificate on the verification can be made in the local point or distant point, or the certificate can be transferred from the distant point to the local point. The certificate can also be stored to the verified measurement device for possible later need.

If the verification of the weighing device is rejected, it is possible that tuning of the weighing device is performed. It is also possible that information required for the tuning is transferred from the distant point to the weighing device by means of data transfer connection. When the weighing device has been tuned it may be possible to perform the verification again or to perform review weighings.

The verification process is monitored from the distant point, which may locate in a desired location at any distance from the location point where the measurements are performed. The weighing results given by the weighing device and the reference scale are thus transferred to the distant point. The weighing results can be transferred from the weighing device and the reference scale to the distant point through their electrical interfaces. As was described above, it is possible to transfer the information as numerical data in form of e.g. digital message, or as image data, whereby the displays of the weighing device and the reference scale are imaged with e.g. mobile station, web camera or a video camera, and the image data is transferred to the distant point. The image information is transferred to the distant point preferably also about the performance of the verification process, such as the transfer of the material sets and the usage of the weighing device and the reference scale. In the distant point, the maximum allowed deviation can preferably be stored and the weighing results of the weighing device and the reference scale can be compared with the maximum allowed value of the deviation. Additionally, it is possible that tuning of the measurement device is performed from the distant point by controlling the weighing device from the distant point by means of data transfer. Common data transfer connections, such as wired and wireless data transfer networks and connections, can be used for data transfer.

As one alternative, the verification information can also be stored and checked afterwards. The storing can be made in the local point, whereby the stored data is transferred to the distant point, and it is possibly stored also in the distant point before checking the data. Alternatively, the recording can be made in the distant point during the performance of the measurements. It is also possible to store the data into a portable storage means or to a storage device, such as a server, which is located in another location.

It should be noted that the verification method can also include repetitions of weighing performed by the weighing device. For example, the verification of the weighing device of a wheel loader may require several weighings of the same precision weight, weighings during the movement of the material transfer means, and/or weighings in different positions of the carrying means and during movement and pauses between the movements of the carrying means. The purpose of several weighings is also to check the repeatability of the weighing results of the weighing device. These phases are also imaged, and the image data and measurement data is transferred to the distant point.

The solution according to the invention also applies to situations where a material transfer means is used with several different carrying means, such as buckets, pegs or grabs. Each carrying means is then examined in the verification. Individual tuning values for each carrying means can be stored in the memory of the weighing device. Tuning values of each carrying means are selected at the scale by selecting the tuning values of the tool being used manually or by providing the weighing device and the tool of the material transfer means with automatic recognition, such as bar code, magnetic tape or RFID identifier. The identification of the tool can also be manual, whereby the tool has e.g. a number identifying the tool, which number is input to the weighing device, after which the weighing device takes the correct tuning parameters into use. This information related to the identification can also be transferred between the local point and the distant point so that the person monitoring the verification can be assured on which tool is related to each verification.

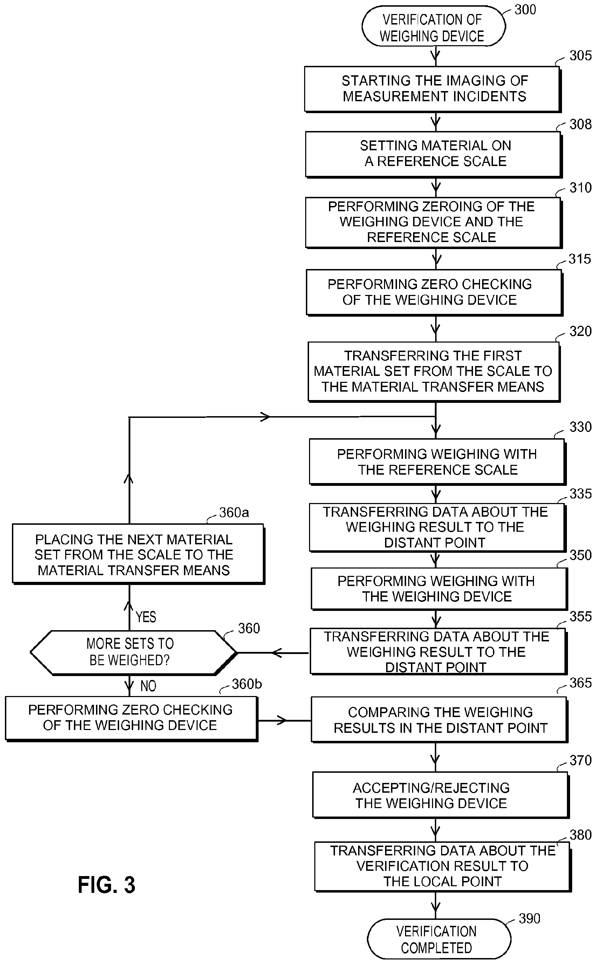

Figure 3 illustrates another embodiment 300 according to the present invention. First in phase 305 imaging of measurement incidents relating to the verification is started. In the imaging, which is performed with imaging means, such as a video camera, image information is achieved, which is transferred electrically from the measurement location to the distant point. At the beginning it is also possible to check the operation of the reference scale by using a small precision weight. After this, material used in the verification is transferred to the reference scale, phase 308. The material can be placed to the reference scale with e.g. material transfer means, the weighing device of which is meant to be verified. Alternatively, the material can be transferred to the reference scale with some other transfer means. It is preferable to transfer to the reference scale so much material that it is sufficient for several material sets to be used in the verification. Before the verification weighings it is checked that the carrying means of the material transfer means is empty, and the weighing device and the reference scale are preferably adjusted to zero, phase 310. After zeroing, preferably zero checking is preferably performed, phase 315. This can be done e.g. in the case of a wheel loader in such a way that an empty bucket is lifted and dropped for e.g. 5 times and it is checked that the weighing result remains zero after each movement of the bucket.

Next the first material set to be used, weighed, is transferred from the reference scale to the material transfer means, phase 320. In the transfer, the material set can be removed from the reference scale by using similar removing manners as were described above in connection with the description of Figure 2. In the method according to Figure 3 the material set to be removed from the reference scale is, however, dropped to the carrying means of the material transfer means. The transfer of the material is preferably imaged, and the image data is transferred to the distant point.

After transferring the first material set it is weighed with the reference scale, how much the weight of the material on the reference scale changed duo to the removal of the first material set, phase 330. This change of weight is the reference weight of the first material set to be used in the verification. If the reference scale is zeroed/tared before the removal of the first material set, the weight of the first material set is achieved after the removal of the first material set directly as an absolute value of the weighing result of the reference scale. If zeroing/taring has not been performed, the reference weight of the first material set is achieved by subtracting the weighing result which is achieved after the removal of the first material set from the weighing result which is achieved before the removal of the first material set. The information on the result of the weighing performed with the reference scale is transferred from the measurement location to the distant point, phase 335.

In phase 350 the first material set is weighed with the weighing device of the material transfer means to which the first material set was transferred from the reference scale. The information on the weighing is transferred from the measurement location to the distant point in phase 355.

Next it is evaluated/checked in phase 360, whether the verification requires more weighings. If further weighings are required, the next material set is placed from the reference scale to the carrying means of the material transfer means in phase 360a e.g. in the same manner as the previous material set. The the verification weight which is used in the verification is larger than the first verification weight, the first material set can be left to the carrying means of the material transfer means and an additional set of material with a size of the difference between the first second verification weight. This way the second material set has a size of the first material set and the additional material set. The transfer of the material is preferably imaged and the achieved image data is transferred from the local point to the distant point. After the transfer of material phases 350-355 are performed again. A required amount of material sets of determined sizes are weighted according to the verification regulations.

When all material sets have been weighed, zero checking of the weighing device is preferably performed, phase 360b. When all material sets have been weighed with rising or descending weight, the weighing results from each material sets are compared to each other in phase 365 in order to determine the deviation between the weighing results of the weighing device and the reference scale. The value of the deviation is further compared with the highest allowed value of the deviation. If the value of the deviation is at most as high as the highest allowed deviation, the weighing device fulfils the regulation in this respect. If the value of the deviation is higher than the highest allowed deviation the weighing device does not fulfil the verification regulations. A certificate on the verification can be made in the local point or distant point, or the certificate can be transferred from the distant point to the local point. The certificate can also be stored to the verified measurement device for possible later need.

The comparison can be made according to Figure3 after all material sets have been weighed. Alternatively the comparison can be made after weighing of each material set before weighing the next material set.

If the deviation is higher than the predetermined maximum value of the deviation, the weighing device may be tuned. When the weighing device has been tuned, verification or checking weighings may possibly be performed. After the weighings of the material sets and the comparisons of the results have been performed, the verification is finished, phase 390.

Also in the embodiment of Figure 3 information can be transferred to the distant point directly from the weighing device and the reference device in e.g. digital, numeric form, or said devices and the verification process van be imaged with a mobile station, web camera or video camera, for example, whereby the all this image data can be transferred to the distant point. The verification incident can also ne stored and the incident can thus be examined afterwards. By means of storing the person monitoring the verification can monitor the verification independently on time and place via the Internet, for example.

Further, it is possible to store the highest allowed value of the deviation in the weighing device, into which value the measured deviation can be compared. It is also possible that the verification incident is monitored from the distant point. For example, it is possible to transfer information from the distant point to the reference scale on which size of a material set is to be transferred from the reference scale to the weighing device. There may also be a data transfer connection between the weighing device and the reference scale, whereby the weighing device can monitor the weighing incident and e.g. to give information to the reference scale on the size of the material set to be transferred. Further, it is possible that a data transfer connection has been arranged to the distant point only from the weighing device or the reference scale, whereby the connection between the weighing device and the reference scale is also used fro the transfer of data between the distant point and the device which does not have a direct connection to the distant point.

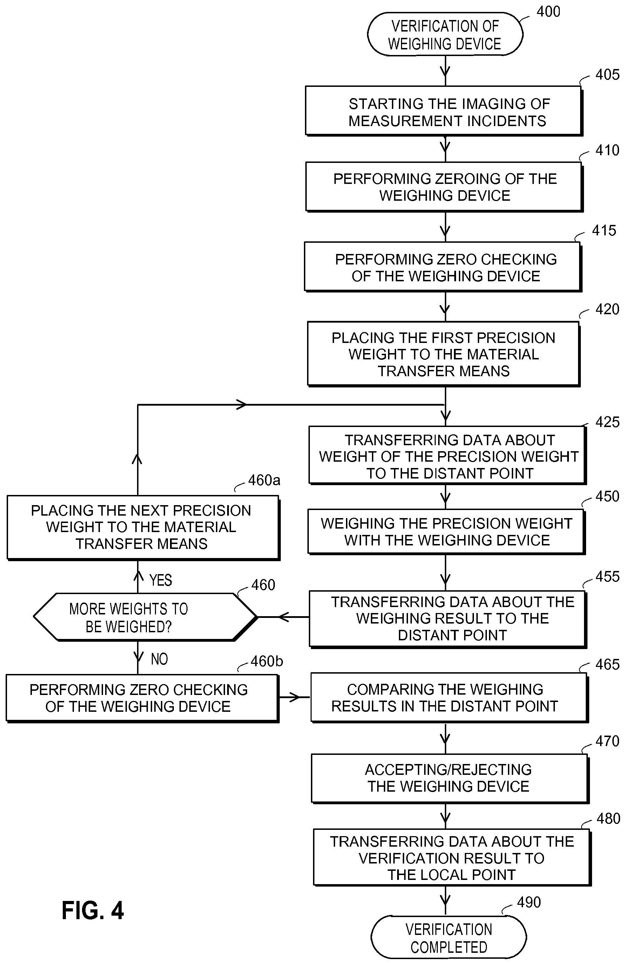

Figure 4 illustrates a third embodiment according to a method according to the invention 400, in which the measurement device is a weighing device of material transfer means. First in phase 405 imaging of the measurement incidents is started. In the imaging, which is performed with imaging means, such as a video camera, image information is achieved, which is transferred electrically from the measurement location to the distant point. In phase 410 it is checked whether the carrying means of the material transfer means is empty, and the weighing device is zeroed. After zeroing, preferably zero checking of the weighing device is preferably performed, phase 415. This can be done e.g. in the case of a wheel loader in such a way that an empty bucket is lifted and dropped for e.g. 5 times and it is checked that the weighing result remains zero after each movement of the bucket.

In phase 420 a first precision weight, which serves as a precision object and corresponds in its weight e.g. the smallest verification weight to be used, is placed on the material transfer means. The precision weight can be placed to the material transfer means with another transfer means, for example. In phase 425 information on the weight of the precision weight placed on the material transfer means is transferred from the local point to the distant point. A weight marking of the precision weight can be e.g. imaged and the image data can be transmitted to the distant point. Another alternative is that the weight marking of the precision weight is read with an optical reader, and the read data is transferred to the distant point. In this case, the precision weight may have a bar code, for example, which shows the weight data and which is read with a bar code reader. Further, the weight information can alternatively be stored electrically or magnetically to the precision weight by connecting e.g. an RFID chip or a magnetic tape to the precision weight. The data to be transmitted to the distant point is then read with an RFID reader or a magnetic reader.

The precision weight is weighed with the weighing device of the material transfer means in phase 450. The information on the weighing is transferred electrically to the distant point, phase 455, in which distant point the weighing result is recorded or stored. Transferring the data related to the weighing result can be performed in e.g. form of digital, numeric data, whereby the data is received from the measurement device under verification. However, it is also possible to image the display of the measurement device with imaging means, such as a camera or a video camera, and to transfer the achieved image information to the distant point. A person located in the distant point can read the display reading of the measurement device, or the reading can be recognised by means of e.g. pattern recognition. There is an advantage in transferring image information that it is easier to verify the correctness of the transferred information, but there is a disadvantage that a higher transfer capacity is required for transferring a sufficiently accurate image when compared to transferring numerical information.

After weighing the precision weight can be removed from the material transfer means if it is not desired to perform next a measurement using several precision weights and to use the precision weight already existing on the material transfer means as one precision weight. The transfer actions of the precision weights and the zeroing/taring mentioned above are preferably imaged, and the image data is transferred to the distant point for monitoring the actions. The data about zeroing/taring can be transferred additionally or alternatively in the form of e.g. a digital message based on a signal received from the weighing device.

Next it is evaluated in phase 460, whether the verification requires more weighings of precision weights. Often the verification is made with many different weights and/or loads. The amount of weighings and the verification weights to be used are commonly determined by the authorities. If further weighings are required, the next precision weight or combination of weights is placed on the carrying means of the material transfer means in phase 460a. After this, phases 425-455 are performed again. A required amount of precision weights and/or their combinations of determined sizes are weighed according to the requirements of the regulations, and the result data of the weighings and the image data about the performance of the verification are transferred from the local point to the distant point.

After all material sets have been weighed, zero checking is preferably performed, phase 460b. If desired, the zero checking can also be performed after weighing of each precision weight/combination before the next precision weight/combination is placed on the material transfer means in phase 460a.

After this, in phase 465 weighing results given by the weighing device from each set of precision weights are compared with known values of the precision weights in the distant point in order to determine the deviation between weight data of the weighing device and the known ones. The deviation value is compared to the highest allowed value of the deviation. If the value of the deviation is at most as high as the highest allowed deviation, the weighing device fulfils the verification regulations in this respect. If the value of the deviation is higher than the highest allowed deviation the weighing device does not fulfil the verification regulations. The comparison can be made as shown in Figure 4 after weighing all material sets. In this case it is possible, instead of the instant data transfer shown in the flow diagram, to perform the transfer of the measurement result data from the local point to the distant point not until all the measurements have been performed. Alternatively, the comparison can be made after weighing of each material set, whereby the measurement result is transferred from the measurement point to the distant point preferably after each measurement.

When the weighings and result comparisons of the material sets have been performed, the information on the result of the verification, i.e. the acceptance/rejection 470 of the weighing device, can be transferred electrically from the local point to the distant point, phase 480. After this, the verification is finalised, phase 490. A certificate on the verification of the weighing device can be made in the local point or distant point, or the certificate can be transferred from the distant point to the local point. The certificate can also be stored in the verified weighing device for possible later use.

If the verification of the weighing device is rejected, it is possible that tuning of the weighing device is performed. When the weighing device has been tuned it may be possible to perform the verification again or to perform review weighings.

A weighing device is often tuned before the verification It is also possible to perform the tuning by means of precision weights by using one or several precision weights according to phases 410-460. However, if the deviation achieved in the verification is higher than the predetermined maximum value of the deviation, the tuning can be made on the basis of the deviations between the achieved weighing results and the known weight values.

The verification process is monitored from the distant point, which may locate at any distance from the location point where the measurements are performed. The weighing results given by the weighing device and the reference scale are thus transferred to the distant point. The weighing results can be transferred from the weighing device and the reference scale to the distant point through their electrical interfaces. As was described above, it is possible to transfer the information as numerical data in form of e.g. digital message, or as image data, whereby the displays of the weighing device and the reference scale are imaged with e.g. mobile station, web camera or a video camera, and the image data is transferred to the distant point. The image information is transferred to the distant point preferably also about the performance of the verification process, such as the transfer of the material sets and the usage of the weighing device and the reference scale. In the distant point, the maximum allowed deviation can preferably be stored and the weighing results of the weighing device and the reference scale can be compared with the maximum allowed value of the deviation. Additionally, it is possible that tuning of the measurement device is performed from the distant point by controlling the weighing device from the distant point by means of data transfer. Common data transfer connections, such as wired and wireless data transfer networks and connections, can be used for data transfer.

As one possibility, the data can also be stored and checked afterwards. The storing can be made in the local point, whereby the stored data is transferred to the distant point, and it is possibly stored also in the distant point before checking the data. Alternatively, the recording can be made in the distant point during the performance of the measurements.

It should be noted that the verification method can also include repetitions of weighing performed by the weighing device. For example, the verification of the weighing device of a wheel loader may require several weighings of the same precision weight, weighings during the movement of the material transfer means, and/or weighings in different positions of the carrying means and during movement and pauses between the movements of the carrying means. The purpose of several weighings is also to check the repeatability of the weighing results of the weighing device. These phases are also imaged, and the image data and measurement data is transferred to the distant point.

The solution according to the invention also applies to situations where a material transfer means is used with several different carrying means, such as buckets, pegs or grabs. Each carrying means is then examined in the verification. Individual tuning values for each carrying means can be stored in the memory of the weighing device. Tuning values of each carrying means are selected at the scale by selecting the tuning values of the tool being used manually or by providing the weighing device and the tool of the material transfer means with automatic recognition, such as bar code, magnetic tape or RFID identifier. This information related to the identification can also be transferred between the local point and the distant point so that the person monitoring the verification can assured on which tool is related to each verification.

The principles of the methods shown in Figures 2-4 can be used, in addition to the weighing devices, also for the verification of measurement devices which measure other magnitudes. In the following, some examples of such magnitudes and verification applications are described.

Volume is often measured with a container, into which material to be measured is filled, whereby the container has a scale or another marking, by means of which the volume of the material can be estimated. The volume can also be measured by means of a mechanical or electrical measurement device at the container, which devices are used in e.g. fuel tanks. In accordance with the invention, the verification can be made by using an accurate reference measuring container in such a way that a certain amount of material is measured both with the container to be verified and with the reference measuring container. Measurement results of both are transferred to the distant point, wherein the measurement results are compared with each other. If the measurement results deviate from each other by less than the predetermined highest allowed deviation, the verification of the container is accepted. Additionally, the filling of the containers with material / the transfer of material from one container to the other is preferably imaged and the image information is transferred to the distant point for the purpose of monitoring the verification. Also the measurement result can be transferred to the distant point as image data.

Another possibility for verification of a container used for measuring volumes is to use an accurate amount of material. The measurement can thus be performed by means of such a quantity of liquid, whose volume is known with sufficient accuracy compared to the accuracy required in the verification. In this case the known amount of material is placed on the container under verification, and the measurement result is checked at the container. The measurement result and the information on the known quantity of the material is transferred to the distant point, where the measurement result is compared with the known volume value of the material. If the deviation is at most as high as the highest allowed deviation, the verification is accepted. Further, the filling of the container with material is imaged, and the image information is transferred to the distant point for the purpose of monitoring the verification. Also the measurement result and the information on the volume of the precision material can be transferred to the distant point as image data.

Volume measurement is often also used for measuring volume of flowing liquid. This kind of a measurement device is used for e.g. the measurement of water consumption, whereby an e.g. mechanical or electric measurement device is connected to a pipe wherein the liquid to be measured flows. A measurement device like this can be used for debiting consumption of liquid quantity, whereby the verification of the measurement device is essential. The verification can be performed in accordance with the invention by e.g. connecting a reference measurement device in series with the measurement device under verification, whereby the flowing liquid travels through both measurement devices. The reference measurement device must have a sufficient accuracy in relation with the accuracy that is required in the verification. A desired amount of substance to be measured is led through the measurement devices, and the measurement results are transferred to the distant point. The measurement results can be transferred in the form of e.g. digital, numeric data or by imaging the displays of the measurement devices and by transferring the achieved image data. Additionally, the performance of the measurement is preferably imaged, and said the related image data is transmitted to the distant point. The results of the measurement device under verification and the reference measurement device are compared with each other, and if their difference is at most equal to the predetermined highest allowed deviation in its quantity, the verification of the measurement device is accepted.

Verification of a volume measurement device can also be performed is such a way that material is led through the measurement device under verification, and the quantity of the material is known accurately enough in relation to the verification accuracy. Thereby the measurement result achieved with the measurement device and the information on the known volume of the material quantity are transferred to the distant point. In addition, the performance of the measurement is preferably imaged, and related image information is transmitted to the distant point. The measurement result of the measurement device under verification is compared with the known volume value of the used material quantity, and if their difference is at most equal to the predetermined highest allowed deviation, the verification of the measurement device is accepted.

Verification of a flow meter can be performed in a corresponding manner by means of a reference measurement device as was described above. Thereby the information on the results of the flow meter and the reference measurement device are transferred to the distant point. Results of the flow meter under verification and the reference measurement device are compared with each other, and if their difference has at most the value of the predetermined highest allowed value of deviation, the verification of the measurement device is accepted. If it is possible to form a material flow of such amount which is known sufficiently accurately, it is possible to perform the verification without a reference measurement device. In this case information on the result given by the measurement device under verification and the known value of the flow are transferred to the distant point. The measurement result of the measurement device under verification is compared with the known value of the flow, and if their difference has at most the value of the predetermined highest allowed deviation, the verification of the measurement device is accepted. Flow meters can be used for e.g. measuring a volume of a flowing substance, whereby a time integral of the measured flow is formed in order to determine the volume of a substance which has flowed within a specified time.

The verification solution according to the invention can also be used for verification of rate meters of vehicles which measure distance, time and/or velocity. These kinds of meters are used in taxis, for example. The verification can be performed by using a reference measurement device, whereby the measurement is performed simultaneously with a measurement device under verification and a reference measurement device, which is connected to a vehicle with which a desired distance is driven using a desired velocity. The achieved results are transferred to the distant point, wherein the results achieved with the measurement device under verification and the reference measurement device are compared with each other. If the difference of the measurement results has a value which is at most as high as the highest allowed deviation the verification of the measurement device is accepted. The measurement results can be transferred e.g. in the form of digital, numerical data received from electrical connections of the devices or by imaging the displays of the measurement devices and transferring the achieved image data. Additionally, the performance of the measurement is preferably imaged and the related image data is transferred to the distant point. The transfer of the data is preferably made wirelessly, whereby the data can be transferred from a moving vehicle.

It is also possible to verify a rate meter by driving a distance which is known sufficiently accurately with a vehicle, using velocities which are sufficiently accurately known, so that it is known in advance which reading the rate meter connected to the vehicle should show after driving the distance. Thereby, information on the reading shown by the rate meter and on the correct reading known in advance are transferred to the distant point, wherein they can be compared with each other. If the value shown by the rate meter deviates at most the amount of the highest allowed deviation, the verification of the rate meter is accepted. Also in this verification procedure the performance of the verification is preferably imaged and the related image information is transmitted to the distant point in order to monitor the performance of the verification.

The verification solution according to the invention can also be used for verification of measurement devices which measure power or energy. For example, verification of a measurement device which measures electric energy can be performed by connecting in series with the measurement device a reference measurement device, the accuracy of which is sufficient in relation to the accuracy required in the verification. A desired amount of energy is transferred through the measurement devices, and the measurement results are transferred to the distant point, in which the results of the measurement device under verification and the reference measurement device are compared with each other. If the difference between the measurement results has a value of at most the predetermined allowed deviation, the verification of the measurement device is accepted. The measurement results can be transferred e.g. in the form of digital, numerical data received from electrical connections of the devices or by imaging the displays of the measurement devices and transferring the achieved image data. Additionally, the performance of the measurement is preferably imaged and the related image data is transferred to the distant point.

It is also possible to verify a measurement device which measures power or energy by transferring through the measurement device power or an amount of energy, the value of which is known sufficiently accurately in relation to the accuracy which is required in the verification. The measurement result of the measurement device under verification is compared with the known value of the power or the amount of energy, and if the difference between these has a value of at most the predetermined highest allowed deviation, the verification of the measurement device is accepted. Power and energy measurement devices can be used for e.g. the measurement of used/transferred heating water or electricity.

In addition to measurement devices which measure electric power or energy it is also possible to use the verification solution according to the invention for the verification of measurement devices which measure other electric magnitudes. Such magnitudes include e.g. current, voltage, frequency, amplification, attenuation, etc. The invention can also be used for the verification of measurement devices which measure magnitudes that relate to optics/radiation. These kinds of magnitudes include e.g. intensity and wave length of light/radiation. Measurement devices measuring these magnitudes can be used e.g. for inspection of light sources and the measurement of radiation produced by x-ray sources. In a corresponding manner, the invention can also be used in the verification of acoustic measurement devices. These kinds of measurement devices are used in e.g. measurement of acoustic noise.

The present invention can also be used for verification of a measurement device which measures temperature. These kinds of measurement devices are used e.g. in cold stores. The verification can be performed by e.g. using a reference measurement device, the measurement accuracy of which is sufficient in relation to the accuracy required in the verification. In this case, the measurement device under verification and the reference measurement device measure the temperature of the same object, such as the temperature of the surrounding air. The measurement results that are achieved at certain points of time are transferred from the local point to the distant point. The measurement results are compared with each other, and if the deviation has at most the value of the highest allowed deviation, the verification is accepted.

Another alternative is to use, instead of a reference measurement device, a precision object the temperature of which is accurately known. This kind of a precision object can be e.g. water which is in icing or boiling point, the temperature of which is known with sufficient accuracy. Thereby, the data about the results given by the measurement device under verification and the data about the known temperature of the precision object are transferred to the distant point. The information is compared with each other, and if the deviation has at most the value of the highest allowed deviation, the verification is accepted. In addition, the performance of the measurements is imaged and the related image data is transferred to the distant point in order to monitor the verification.

Further, the invention can be used for verification of measurement devices which measure substance concentration. These kinds of measurement devices include e.g. chemical analysers, such as medical analysers, alcometers, devices which measure concentration of emissions, such as exhaust gases etc. Also in these mentioned applications it is possible to perform the verification either by using a reference measurement device or a precision object, of which the value of the magnitude to be measured is known. Thereby, data about the results achieved with the measurement device under verification and about the value of the magnitude to be measured which is achieved in another way are transferred from the local point to the distant point. The data is compared with each other, and if the deviation has at most the value of the highest allowed deviation, the verification is accepted. In addition, the performance of the measurement is imaged and the related image data is transferred to the distant point in order to monitor the verification.

Figure 5 illustrates a system for implementing a method according to the invention for the verification of a weighing device of material transfer means by means of a reference scale, whereby measurement results of the measurement device and the reference scale are transferred to the distant point. A corresponding system can be used, however, as well in relation to measurement devices which measure other magnitudes.

In the system illustrated in Figure 5, the material transfer means is a wheel loader 10, which has a weighing device 60. The weighing device measures weight of the material placed in the bucket of the wheel loader by means of one or several sensors 61. The sensors comprise e.g. a pressure sensor which is installed in the lifting cylinder of bucket and a positional and/or an acceleration sensor installed in the lifting shaft. A measurement unit 62 of the weighing device receives the signals achieved from the sensors and calculates the weighing result. The weighing result is shown to the user on a user interface 63, which includes a display, for example. The user interface has preferably also input means, such as a keyboard, by means of which the functions of the weighing device can be controlled. By means of input means the weighing device can e.g. be set into weighing mode, verification mode or tuning mode, and weighing results and tuning data achieved in the verification can be input to the weighing device. The measurement device also has a data transfer unit 65 for transferring data electrically between the measurement device and another device. The measurement device further has means 66 for transferring data through radio waves. A data transfer unit is, however, not needed if the measurement results are transferred to the distant point as image data, which includes e.g. images about measurement results shown on the display.

The system also has a reference scale 40, which has been installed on a platform of a truck 47. The reference scale is thus tiltable for removing weighed material. One or several weighing sensors 71 are related to the electric part 70 of the reference scale, which sensors can be e.g. strain gauges or pressure sensors. The sensors have been placed e.g. between the weighing platform and the installation platform, or between the weighing platform and other structure of the reference scale. The measurement unit 72 of the reference scale receives signals achieved from the sensors and calculates the measurement result. The weighing result is shown to the user on the user interface 73, which includes e.g. a display. The user interface has preferably also input means, such as a keyboard, by means of which the functions of the reference scale device can be controlled. Also the reference scale has a data transfer unit 75 for transferring data electrically between the measurement device and another device. The reference scale also has means 66 for transferring data through radio waves. A data transfer unit is, however, not needed if the measurement results are transferred to the distant point as image data, which includes e.g. images about measurement results shown on the display.

In connection with the verification, material sets are placed on the bucket of the wheel loader and transferred away from it. Corresponding material sets are transferred to the reference scale and away from the reference scale. Material sets used in verification can be transferred with the wheel loader and/or the reference scale. This way separate transfer means are not needed for transferring material sets to be weighed.

The system also has imaging means 81 and 83 for transferring image information from the local point to the distant point. The imaging means have means 82, 84 for wireless data transfer. These imaging means are mobile stations, web cameras, video cameras or corresponding ones, and they have been arranged to transmit to the distant point image information from the user interface of the weighing device and the reference scale, such as from the display and from the keyboard. This way it is possible to see at the distant point the shown weighing results and also the actions that are performed with the user interfaces of the weighing device and the reference scale. A third camera 85 of the system is arranged to image the verification procedure at a wider area, whereby it is possible to monitor e.g. the transfers of material sets from the distant point. Also this third camera can be equipped with a wireless data transfer means, 86.

The weighing device, the reference scale and/or the imaging means can thus have data transfer means, by means of which it is possible to transfer weighing results directly to the distant point or to a local station 80, such as a computer, located at the local point, which station forwards the data to the distant point by means of data transfer means 88 of the data acquisition device. The data transfer means of the weighing device and the reference scale can also be used for transferring data between said devices. The communication can take place in wireless or wired manner by using short range data transfer or public data transfer systems, such as cellular network or Internet network or their combinations. Therefore, the weighing device and the reference scale can transfer also other data which relate to the verification between those devices and other devices. The information can be e.g. the size of the next material set required in the verification, the weighing result achieved with reference scale, the weighing result achieved with the weighing device, tuning parameters, etc. By means of the data transfer it is possible to make the verification procedure automatic so that the user need not input data concerning weighing sets and/or information relating to tuning and/or a check sum to the weighing device.

In the system illustrated in Figure 5 data relating to the verification is transferred in accordance with the invention to the distant point 90, in which monitoring of the verification can be performed. The monitoring can be performed e.g. by an authority, by someone authorised by an authority or by an instance, which administers material transfer equipment or verification equipment. In the distant point there is equipment for data transfer and data processing, such as a personal computer 90, which has means 96 for transferring data. The data transfer can take place, for example, in a wireless manner via a cellular network or in a wired manner via the Internet network or as a combination of these.

The data transfer between the work station of the distant point and the weighing device and the reference scale can take place directly, via a local station 80, or the work station can be connected to the Internet, through which the data travels. Thus the weighing results given by the weighing device and the reference scale can be acquired to the distant point. Additionally, it is possible that the verification procedure is also monitored from the distant point. It is also possible that the data to be transferred from the local point to the distant point are stored before, during or after the transfer of the data. Thus the storing of the data may take place in the local point, such as in a computer 80 which serves as a local station, or in the distant point. It must be noted that if the data is stored in the local point into a portable storage, such as a CD disc or a memory stick the transfer of the data to the distant point may also take place by delivering said storage means from the local point to the distant point. If the verification-related data which is to be transferred are stored, it is preferable also to store the information on the actual time of performance of the verification. The time information can be achieved from e.g. a camera, whereby the imaging time is stored together with the storing of the images of the camera. It may be preferable to transfer the information on the point of time to the distant point together with other data even if the data would be transferred in real time.

The data transfer of the units which are located in the local point, illustrated in Figure 5, can be implemented by means of e.g. a wired data transfer network (LAN, for example), a short range wireless data transfer (WLAN, Bluetooth data transfer) or by using e.g. public wireless cellular network.

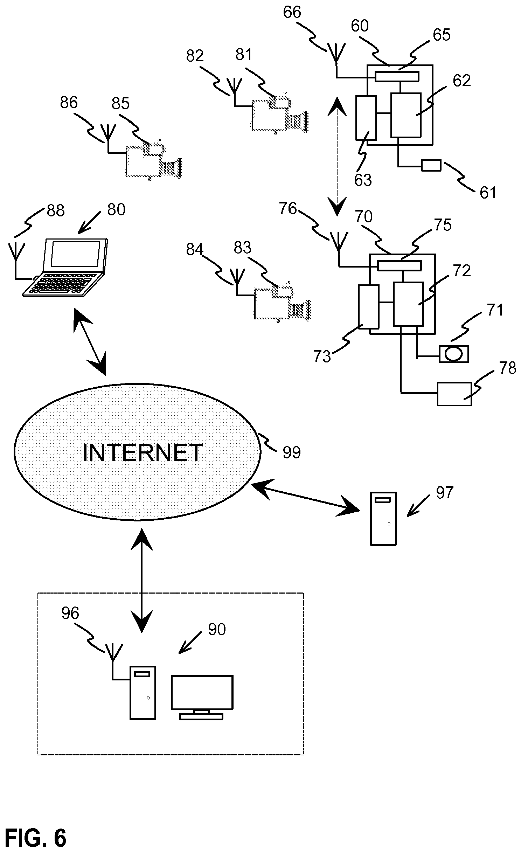

The data transfer between the units of the local point, such as a local station, and the distant point can be implemented by using e.g. public cellular network data transfer, such as GSM (Global System for Mobile Communications), UMTS (Universal Mobile Telephone Service), GPRS (General Packet Radio Service) data transfer. It is also possible to use Internet for the data transfer in such a way, for example, that the station 80 of the local point and the station 90 of the distant point connect to the Internet in a wireless or wired manner. The use of Internet for the data transfer is described in more detail in in connection with the description of Figure 6.

Figure 6 illustrates another exemplary system for implementing a method according to the invention for verification of a measurement device. The measurement device 60 to be verified can be a measurement device measuring some physical magnitude, such as weight, volume, flow, distance, velocity, temperature, energy, power etc. The measurement device has one or several sensors 61, which converts the the magnitude to be measured into an electric signal, which is further amplified and converted into digital form in the measurement unit 62. The measurement unit 62 calculates the measurement result on the basis of the signals received from the sensors. The measurement unit may thus have a memory, processor and means for processing the signal received from the sensors, such as performing a mathematic correction to be made for the signal. The measurement unit can also have a circuit which detects time and date and which may have been arranged in such a way that the information of the measurement moment is combined to the measurement result.

The measurement result is shown to the user with a user interface 63, which includes e.g. a display. The user interface has preferably also input means, such as a keyboard, by means of which the functions of the weighing device can be controlled. By means of input means the weighing device can e.g. be set into weighing mode, verification mode or tuning mode, and weighing results and tuning data achieved in the verification can be input to the weighing device. The measurement device also has a data transfer unit 65 for transferring data electrically between the measurement device and another device. The measurement device further has means 66 for transferring data through radio waves.

The system illustrated in Figure 6 also has a reference measurement device 70, which measures the same magnitude as the measurement device under verification. The reference measurement device may have corresponding parts 71-76 as the parts 61-66 of the measurement device. The reference measurement device is, however, better in its accuracy than the accuracy required in the verification. The reference measurement device shown in Figure 6 also has a reader device 78, by which it is possible to read the magnitude value of a precision object, such as a precision weight. The reader can be a magnetic reader, an RF reader or an optical reader, such as a bar code reader. This way it is possible to use precision objects for performing the verification, instead or in addition to a reference measurement device. The reader device may connect to a local station 90, such as a computer, which is located at the local point. In such a case reference measurement device is not necessarily needed for performing the verification when a precision object is available. Further, the reader can be an independent device, which has a similar wireless or wired interface as the measurement devices and the cameras of the system.

The system includes an imaging means 81 for imaging the measurement under verification during the verification, and imaging means 83 for imaging the reference measurement device during the verification. The imaging means can be directed to image the measurement devices in such a way that image formed by the imaging means shows the display of the measurement device under verification / reference measurement device, and the readings on the display. This way the measurement results can be transferred and stored also when the measurement device under verification and/or the reference measurement device is mechanical or it does not otherwise have an electrical connection for transferring the measurement results electrically. The system also has a third imaging means 85, which is directed to image the performance of the phases related to the verification. The imaging means can be an analogue or digital camera, a video camera, a web camera or a mobile communicator. The imaging means may have means for image processing, by which it is possible to convert the image data into another form, and means for transmitting image data in a wireless or wired manner, possibly including means for connecting to a data network. Signal processing means for processing image data may also locate in some other data processing device, such as the local station 80, station of the distant station 90, or on a server 97 which is connected to a network. Additionally, the imaging means may also have a memory unit for storing image data, and a processor for e.g. converting image data into another form, and means for lighting the object being imaged, such as a flashlight or a halogen light, for example. The imaging means may also have an organ which indicates time or date, which may have been arranged in such a way that information on the moment of the imaging is combined to the image data.

The wireless data transfer connections 66, 76, 82, 84 and 86 which are situated in the measurement device under verification, in the reference measurement device and the imaging means can transfer data directly to the distant point 90 via some data transfer network, such as a cellular system or Internet. However, the system preferably has a local station 80, such as a portable computer, to which the data transfer of the measurement devices and the cameras takes place at the first instant. The data transfer between the devices of the local point can take place e.g. in a wired manner of by using a short range data transfer, as was described above. The local station 80 collects the data from the measurement devices and the cameras of the local point and forwards the data further to the distant point 90. It is, however, possible that a server 97 is connected to a data transfer network, such as the Internet, to which server the data is transferred and stored from the local station. Then a computer which is located in the distant point and connected to a data transfer network can fetch the data from the server 97 when it is desired in the distant point to perform the monitoring of the verification. The data can be stored alternatively or additionally to the local station 80, to a portable storage means or to a computer station, as was described above.

The computer 80 serving as the local station has typically means for connecting to a data network 99, such as the Internet, via some data transfer connection, and means means for transmitting measurement data/image data to the data network. In a corresponding manner, the computer 90 serving as a distant station has means for receiving or loading data from the data network. The computers also typically have at least one processor for processing data, at least one memory unit, which may comprise RAM i.e. central memory (Random Access Memory) as well as ROM i.e. permanent memory (Read only Memory), and additionally intermediate memory. In addition, a data processing device may have e.g. statistic data processing means. The local station can preferably be a portable computer, whereby it is easy to be transported between verification locations e.g. together with a reference measurement device. The reference measurement device and the local station can also be integrated into one device entity.

It is possible to make a certificate of the verification e.g. in a local station situated at the local point, or in the distant station situated at the distant point. The certificate can be printed with a printer connected to the station, or the certificate can be formed and kept in electric form. If desired, the certificate can also be transferred from teh distant point to the local point. The certificate can also be stored in the verified measurement device for possible later need.

The invention has been described with the reference to the enclosed embodiments. It is, however, clear that the invention is not restricted only to those, but is comprises all embodiments which can be imagined within the inventive idea and the enclosed patent claims.

One must note, for example, that the data transfer according to the invention is not in any way restricted to the use of only those data transfer connections or data networks which are mentioned in this description, but the idea can be applied and used in any data transfer solutions.

Even if the application of the invention for verification of weighing devices is advantageous, it is clear that the described embodiments can as well be applied to the verification of measurement devices which measure other magnitudes.

Above, it was described verification of a weighing device which was in connection with a wheel loader, but the invention can naturally as well be applied in connection with all kinds of loading etc. material transfer means, such as an excavator, a material machine, a forklift, a crane, flat scale, a belt scale, a conveyor, a silo, a car, a train, a garbage truck, a timber truck, a harvester, a drive machine, a mini loader, a dumper, a reach truck, a tank truck, or other weighing devices. In a corresponding manner, the material to be weighed can be loose material, grain material, longitudinal material or liquid material. The carrying container of the material transfer means can be a container, platform or a gripper instead of a bucket.

Although the verification of the measurement device is mentioned to be preferably to fill the requirements of the authorities, it is naturally possible to use the in the verification of the measurement device also a better limit of accuracy. Additionally, even if verification of a measurement device based on legislation, law, decree or directive has been described as the most preferable embodiment, the invention can naturally be used also in such applications, targets and environments, wherein the verification is not an action required by the authorities but is based on voluntariness, standards, recommendations or other agreements.

## Claims

1. Method (200, 300, 400) for verification of a measurement device (60, 70), comprising
- performing in the location of the measurement device (60, 70) a measurement of a first quantity, which relates to a first object, with the measurement device (60, 70) under verification in order to achieve a measurement result,
- forming data about a reference value (330, 350, 450) of the measured quantity,
- comparing the measurement result with the reference value (265, 365, 465), and
- accepting or rejecting (270, 370, 470) the verification of the measurement device (60, 70) on the basis of said comparison, **characterised in that** the method further comprises:
- performing imaging phases (205, 305, 405) related to the verification with imaging means for forming image data,
- transferring said image data from the location of the measurement device (60, 70) to a thereto remote location (80, 90) for monitoring the verification in the remote location (90),
- transferring (235, 255, 335, 355, 455) from the location of the measurement device (60, 70) to the remote location (90) data about said measurement result e.g. in the form of image data or numeric data,
- transferring (240, 255, 335, 425) from the location of the measurement device (60, 70) to the remote location (90) data about said reference data e.g. in the form of image data or numeric data,
wherein the rejecting or accepting the verification is made (270, 370, 470) on the basis of the information transferred from the location of the measurement device (60, 70) to the remote location (90).

2. Method (200, 300, 400) according to claim 1, **characterised in that** said comparison (265, 365, 465) is performed in the remote location.

3. Method (200, 300, 400) according to claim 1 or 2, **characterised in that** said image data includes said data about the measurement result and/or said data about the reference value.

4. Method (200, 300, 400) according to any of the preceding claims, **characterised in that** said data about the measurement result (235) and/or said data about the reference value (250) is transferred from the location of the measurement device (60, 70) to the thereto remote location (80, 90) as numeric data.

5. Method (200, 300, 400) according to any of the preceding claims, **characterised in that** in order to form the reference value, the quantity relating to the object is measured with a reference measurement device (60, 70).

6. Method (200, 300, 400) according to any of the preceding claims, **characterised in that** the object to be measured is a precision object (450), wherein the value of the quantity to be measured of the precision object is known with an accuracy required in the verification, and the reference value is formed by reading the object related value of the quantity to be measured.

7. Method (200, 300, 400) according to claim 6, **characterised in that** for detecting the reference value the reference value of the precision object is read from writing, bar code, magnetically stored data and/or electrically stored data, which exists at the precision object.

8. Method (200, 300, 400) according to any of the preceding claims, **characterised in that** the accuracy of the reference value in relation to the exact value of the quantity to be measured is better that the accuracy which is required on a measurement device (60, 70) under verification.

9. Method (200, 300, 400) according to any of the preceding claims, **characterised in that** data about the measurement result, data about the reference value or data about the performance of the verification is stored.

10. Method (200, 300, 400) according to claim 9, **characterised in that** the storing is made to a device which is located at the location of the measurement device (60, 70), to a device which is located at the thereto remote location (80, 90), to other device, which connects to a data transfer network connecting the location of the measurement device (60, 70) and the thereto remote location (90), and/or to a portable storage means.

11. Method (200, 300, 400) according to claim 9 or 10, **characterised in that** the stored data is read, and the monitoring of the verification is performed on the basis of the read data.

12. Method (200, 300, 400) according to claim 11, **characterised in that** the monitoring of the verification of a measurement device (60, 70) is performed on the basis of the read data after all measurements relating to the verification of the measurement device (60, 70) have been performed.

13. Method (200, 300, 400) according to any of the preceding claims, **characterised in that** the quantity to be measured with the measurement device (60) under verification is one of the following: weight, volume, flow, power, energy, velocity, acceleration, distance, temperature, concentration of substance, voltage, current, frequency or radiation intensity.

14. Method (200, 300, 400) according to any of the preceding claims, **characterised in that** after the first measurement, one or several measurements are performed with the measurement device (60, 70) in the verification by using one or several other objects in addition to or instead of the measurement object used in the first measurement.

15. Method (200, 300, 400) according to any of the preceding claims, **characterised in that** a highest allowed value of deviation between the measurement result and the reference value is stored in the device which is located at the remote location (90), and the deviation between the measurement result of the measurement device (60, 70) under verification and the reference value is compared to the highest allowed value of the deviation, which is stored in the remote location (90), whereby the acceptance of the rejection of the verification is made on the basis of said comparison.

16. Method (200, 300, 400) according to any of the preceding claims, **characterised in that** the data about the rejection or the acceptance of the verification is transferred from the remote location (90) to the location of the measurement device (60, 70).

## Patentansprüche

1. Verfahren (200, 300, 400) zur Verifizierung einer Messvorrichtung (60, 70), umfassend
- Ausführen, am Standort der Messvorrichtung (60, 70), einer Messung einer ersten Menge, die sich auf ein erstes Objekt bezieht, wobei sich die Messvorrichtung (60, 70) unter Verifizierung befindet, um ein Messergebnis zu erzielen,
- Erstellen von Daten über einen Referenzwert (330, 350, 450) der gemessenen Menge,
- Vergleichen des Messergebnisses mit dem Referenzwert (265, 365, 465), und
- Annehmen oder Ablehnen (270, 370, 470) der Verifizierung der Messvorrichtung (60, 70) auf der Grundlage des Vergleichs, **dadurch gekennzeichnet, dass** das Verfahren ferner umfasst:
- Ausführen von Bildgebungsphasen (205, 305, 405) bezüglich der Verifizierung mit Bildgebungsmitteln zum Erstellen von Bilddaten,
- Übertragen der Bilddaten vom Standort der Messvorrichtung (60, 70) an einen entlegenen Standort (80, 90) zum Überwachen der Verifizierung am entlegenen Standort (90),
- Übertragen (235, 255, 335, 355, 455) von Daten über das Messergebnis, beispielsweise in der Form von Bilddaten oder numerischen Daten, vom Standort der Messvorrichtung (60, 70) an den entlegenen Standort (90),
- Übertragen (240, 255, 335, 425) von Daten über die Referenzdaten, beispielsweise in der Form von Bilddaten oder numerischen Daten, vom Standort der Messvorrichtung (60, 70) an den entlegenen Standort (90),
wobei das Ablehnen oder Annehmen der Verifizierung auf der Grundlage der Information, die vom Standort der Messvorrichtung (60, 70) an den entlegenen Standort (90) übertragen wird, durchgeführt wird (270, 370, 470) .

2. Verfahren (200, 300, 400) nach Anspruch 1, **dadurch gekennzeichnet, dass** der Vergleich (265, 365, 465) am entlegenen Standort durchgeführt wird.

3. Verfahren (200, 300, 400) nach Anspruch 1 oder 2, **dadurch gekennzeichnet, dass** die Bilddaten die Daten über das Messergebnis und/oder die Daten über den Referenzwert enthalten.

4. Verfahren (200, 300, 400) nach einem der vorhergehenden Ansprüche, **dadurch gekennzeichnet, dass** die Daten über das Messergebnis (235) und/oder die Daten über den Referenzwert (250) als numerische Daten vom Standort der Messvorrichtung (60, 70) an den dazu entlegenen Standort (80, 90) übertragen werden.

5. Verfahren (200, 300, 400) nach einem der vorhergehenden Ansprüche, **dadurch gekennzeichnet, dass** zum Ausbilden des Referenzwerts die Menge, die sich auf das Objekt bezieht, mit einer Referenzmessvorrichtung (60, 70) gemessen wird.

6. Verfahren (200, 300, 400) nach einem der vorhergehenden Ansprüche, **dadurch gekennzeichnet, dass** das Objekt, das gemessen werden soll, ein Präzisionsobjekt (450) ist, wobei der Wert der Menge des Präzisionsobjekts, die gemessen werden soll, mit einer Genauigkeit bekannt ist, die bei der Verifizierung erforderlich ist, und der Referenzwert durch Auslesen des objektbezogenen Werts der Menge, die gemessen werden soll, ausgebildet wird.

7. Verfahren (200, 300, 400) nach Anspruch 6, **dadurch gekennzeichnet, dass** zum Erkennen des Referenzwerts der Referenzwert des Präzisionsobjekts aus Schreiben, Strichcode, magnetisch gespeicherten Daten und/oder elektronisch gespeicherten Daten, die am Präzisionsobjekt vorliegen, ausgelesen wird.

8. Verfahren (200, 300, 400) nach einem der vorhergehenden Ansprüche, **dadurch gekennzeichnet, dass** die Genauigkeit des Referenzwerts in Bezug zum exakten Wert der Menge, die gemessen werden soll, besser als die Genauigkeit ist, die an einer Messvorrichtung (60, 70) unter Verifizierung erforderlich ist.

9. Verfahren (200, 300, 400) nach einem der vorhergehenden Ansprüche, **dadurch gekennzeichnet, dass** Daten über das Messergebnis, Daten über den Referenzwert oder Daten über die Ausführung der Verifizierung gespeichert werden.

10. Verfahren (200, 300, 400) nach Anspruch 9, **dadurch gekennzeichnet, dass** das Speichern auf einer Vorrichtung, die sich am Standort der Messvorrichtung (60, 70) befindet, auf einer Vorrichtung, die sich am dazu entlegenen Standort (80, 90) befindet, auf einer anderen Vorrichtung, die zu einem Datenübertragungsnetz verbindet, welches den Standort der Messvorrichtung (60, 70) und den dazu entlegenen Standort (90) verbindet, und/oder auf einem tragbaren Speichermittel durchgeführt wird.

11. Verfahren (200, 300, 400) nach Anspruch 9 oder 10, **dadurch gekennzeichnet, dass** die gespeicherten Daten ausgelesen werden und das Überwachen der Verifizierung auf der Grundlage der ausgelesenen Daten ausgeführt wird.

12. Verfahren (200, 300, 400) nach Anspruch 11, **dadurch gekennzeichnet, dass** das Überwachen der Verifizierung einer Messvorrichtung (60, 70) auf der Grundlage der ausgelesenen ausgeführt wird, nachdem alle Messungen bezüglich der Verifizierung der Messvorrichtung (60, 70) ausgeführt wurden.

13. Verfahren (200, 300, 400) nach einem der vorhergehenden Ansprüche, **dadurch gekennzeichnet, dass** die Menge, die mit der Messvorrichtung (60, 70) unter Verifizierung gemessen werden soll, eines des Folgenden ist: Gewicht, Volumen, Fluss, Leistung, Energie, Geschwindigkeit, Beschleunigung, Distanz, Temperatur, Stoffkonzentration, Spannung, Strom, Frequenz oder Strahlungsstärke.

14. Verfahren (200, 300, 400) nach einem der vorhergehenden Ansprüche, **dadurch gekennzeichnet, dass** nach der ersten Messung eine oder mehrere Messungen mit der Messvorrichtung (60, 70) in der Verifizierung unter Benutzung von einem oder mehreren anderen Objekten zusätzlich zum oder anstelle des Messobjekts, das bei der ersten Messung benutzt wurde, ausgeführt werden.

15. Verfahren (200, 300, 400) nach einem der vorhergehenden Ansprüche, **dadurch gekennzeichnet, dass** ein höchstzulässiger Abweichungswert zwischen dem Messergebnis und dem Referenzwert in der Vorrichtung gespeichert wird, die sich am entlegenen Standort (90) befindet, und die Abweichung zwischen dem Messergebnis der Messvorrichtung (60, 70) unter Verifizierung und dem Referenzwert mit dem höchstzulässigen Wert der Abweichung, der am entlegenen Standort (90) gespeichert ist, verglichen wird, wobei die Annahme der Ablehnung der Verifizierung auf der Basis des Vergleichs vorgenommen wird.

16. Verfahren (200, 300, 400) nach einem der vorhergehenden Ansprüche, **dadurch gekennzeichnet, dass** die Daten über die Ablehnung oder die Annahme der Verifizierung vom entlegenen Standort (90) an den Standort der Messvorrichtung (60, 70) übertragen werden.

## Revendications

1. Procédé (200, 300, 400) pour la vérification d'un dispositif de mesure (60, 70) comprenant :
- l'exécution, à l'emplacement du dispositif de mesure (60, 70), d'une mesure d'une première quantité, laquelle se rapporte à un premier objet, avec le dispositif de mesure (60, 70) en cours de vérification afin d'obtenir un résultat de mesure,
- la formation de données relatives à une valeur de référence (330, 350, 450) de la quantité mesurée,
- la comparaison du résultat de mesure avec la valeur de référence (265, 365, 465), et
- la validation ou le rejet (270, 370, 470) de la vérification du dispositif de mesure (60, 70) sur la base de ladite comparaison, **caractérisé en ce que** le procédé comprend en outre :
- l'exécution de phases d'imagerie (205, 305, 405) relatives à la vérification avec un moyen d'imagerie pour la formation de données d'image,
- le transfert desdites données d'image de l'emplacement du dispositif de mesure (60, 70) vers un emplacement distant (80, 90) par rapport à celui-ci pour la surveillance de la vérification dans l'emplacement distant (90),
- le transfert (235, 255, 335, 355, 455) de données concernant ledit résultat de mesure par exemple sous la forme de données d'image ou de données numériques, de l'emplacement du dispositif de mesure (60, 70) vers l'emplacement distant (90),
- le transfert (240, 255, 335, 425) de données concernant lesdites données de référence par exemple sous la forme de données d'image ou de données numériques, de l'emplacement du dispositif de mesure (60, 70) vers l'emplacement distant (90),
dans lequel le rejet ou la validation de la vérification est effectué(e) (270, 370, 470) sur la base des informations transférées de l'emplacement du dispositif de mesure (60, 70) vers l'emplacement distant (90).

2. Procédé (200, 300, 400) selon la revendication 1, **caractérisé en ce que** ladite comparaison (265, 365, 465) est effectuée dans l'emplacement distant.

3. Procédé (200, 300, 400) selon la revendication 1 ou 2, **caractérisé en ce que** lesdites données d'image incluent lesdites données concernant le résultat de mesure et/ou lesdites données concernant la valeur de référence.

4. Procédé (200, 300, 400) selon l'une quelconque des revendications précédentes, **caractérisé en ce que** lesdites données concernant le résultat de mesure (235) et/ou lesdites données concernant la valeur de référence (250) sont transférées de l'emplacement du dispositif de mesure (60, 70) vers l'emplacement distant (80, 90) par rapport à celui-ci en tant que données numériques.

5. Procédé (200, 300, 400) selon l'une quelconque des revendications précédentes, **caractérisé en ce que** pour former la valeur de référence, la quantité relative à l'objet est mesurée à l'aide d'un dispositif de mesure de référence (60, 70).

6. Procédé (200, 300, 400) selon l'une quelconque des revendications précédentes, **caractérisé en ce que** l'objet à mesurer est un objet de précision (450), dans lequel la valeur de la quantité à mesurer de l'objet de précision est connue avec une exactitude nécessaire à la vérification, et la valeur de référence est formée par lecture de la valeur relative à l'objet de la quantité à mesurer.

7. Procédé (200, 300, 400) selon la revendication 6, **caractérisé en ce que** pour la détection de la valeur de référence, la valeur de référence de l'objet de précision est lue à partir d'une écriture, d'un code-barres, de données enregistrées magnétiquement et/ou de données enregistrées électriquement, lesquels existent au niveau de l'objet de précision.

8. Procédé (200, 300, 400) selon l'une quelconque des revendications précédentes, **caractérisé en ce que** l'exactitude de la valeur de référence par rapport à la valeur exacte de la quantité à mesurer est meilleure que l'exactitude nécessaire sur un dispositif de mesure (60, 70) en cours de vérification.

9. Procédé (200, 300, 400) selon l'une quelconque des revendications précédentes, **caractérisé en ce que** les données concernant le résultat de mesure, les données concernant la valeur de référence ou les données concernant la performance de la vérification sont enregistrées.

10. Procédé (200, 300, 400) selon la revendication 9, **caractérisé en ce que** l'enregistrement est réalisé sur un dispositif situé à l'emplacement du dispositif de mesure (60, 70), sur un dispositif situé à l'emplacement distant (80, 90) par rapport à celui-ci, sur un autre dispositif connecté à un réseau de transfert de données doté d'une connexion au dispositif de mesure (60, 70) et à l'emplacement distant (90) par rapport à celui-ci, et/ou sur un moyen de stockage portable.

11. Procédé (200, 300, 400) selon la revendication 9 ou 10, **caractérisé en ce que** les données enregistrées sont lues, et la surveillance de la vérification est effectuée sur la base des données lues.

12. Procédé (200, 300, 400) selon la revendication 11, **caractérisé en ce que** la surveillance de la vérification d'un dispositif de mesure (60, 70) est effectuée sur la base des données lues une fois que toutes les mesures relatives à la vérification du dispositif de mesure (60, 70) ont été effectuées.

13. Procédé (200, 300, 400) selon l'une quelconque des revendications précédentes, **caractérisé en ce que** la quantité à mesurer à l'aide du dispositif de mesure (60, 70) en cours de vérification est l'une parmi les suivantes, poids, volume, écoulement, puissance, énergie, vitesse, accélération, distance, température, concentration de substance, tension, courant, fréquence ou intensité de rayonnement.

14. Procédé (200, 300, 400) selon l'une quelconque des revendications précédentes, **caractérisé en ce qu'**après la première mesure, une ou plusieurs mesures sont effectuées à l'aide du dispositif de mesure (60, 70) dans la vérification à l'aide d'un ou de plusieurs objets en complément ou en remplacement de l'objet de mesure utilisé dans la première mesure.

15. Procédé (200, 300, 400) selon l'une quelconque des revendications précédentes, **caractérisé en ce qu'**une valeur maximale autorisée de l'écart entre le résultat de mesure et la valeur de référence est enregistrée dans le dispositif situé à l'emplacement distant (90), et l'écart entre le résultat de mesure du dispositif de mesure (60, 70) en cours de vérification et la valeur de référence est comparé avec la valeur maximale autorisée de l'écart, laquelle est enregistrée dans l'emplacement distant (90), moyennant quoi la validation ou le rejet de la vérification est effectué(e) sur la base de ladite comparaison.

16. Procédé (200, 300, 400) selon l'une quelconque des revendications précédentes, **caractérisé en ce que** les données concernant le rejet ou la validation de la vérification sont transférées de l'emplacement distant (90) vers l'emplacement du dispositif de mesure (60, 70) .
